# EUROPÄISCHE PATENTSCHRIFT

(11) **EP 3 470 252 B1**
(45) Veröffentlichungstag und Bekanntmachung des Hinweises auf die Patenterteilung: **27.05.2020**
(21) Anmeldenummer: 17195763.2
(22) Anmeldetag: 10.10.2017
(51) Int. Cl.: B60K 15/03, B60K 15/035, B60K 15/063, B60K 1/04

(54) **TANKSYSTEM FÜR EIN FAHRZEUG**
TANK SYSTEM FOR A VEHICLE
RÉSERVOIR DE VÉHICULE

(43) Veröffentlichungstag der Anmeldung: 17.04.2019
(73) Patentinhaber: Salzburger Aluminium Aktiengesellschaft, 5651 Lend (AT)
(72) Erfinder: RASSER, Christian, 5660 Taxenbach (AT); BERGER, Simon, 6391 Fieberbrunn (AT)
(74) Vertreter: Weiser & Voith Patentanwälte Partnerschaft

(56) Entgegenhaltungen:
- EP-A1- 3 093 178
- CN-A- 106 864 435
- DE-A1-102013 019 555
- US-A1- 2017 023 179

## Beschreibung

Die vorliegende Erfindung betrifft ein Tanksystem für ein Fahrzeug, mit zumindest zwei Tanks zur Aufnahme von Kryofluiden wie verflüssigtem Wasserstoff oder Erdgas (Liquefied Natural Gas, LNG).

Bei Tanksystemen dieser Art liegt das Kryofluid in jedem Tank unter Tiefsttemperaturbedingungen von bis zu -130 °C und Drücken von bis zu 20 - 25 bar in Form eines Zweiphasengemischs aus Kryogas und Kryoflüssigkeit vor. Kryoflüssigkeit wird vom Bodenbereich des Tanks entnommen, in einem Wärmetauscher verdampft und im gasförmigen Zustand dem Verbrennungsmotor des Fahrzeugs als Brennstoff zugeführt. Zum Betanken wird der Tank zunächst über eine mit dem Kopfraum der Tanks in Verbindung stehende Ventleitung entgast, um Druck abzubauen und so die Aufnahme der über eine Füllleitung getankten Kryoflüssigkeit zu erleichtern und zu maximieren. Als Sicherheitsgründen muss dabei jede Ventleitung tankseitig mit einem Absperrventil ausgestattet sein, das beim Tanken manuell geöffnet und geschlossen werden muss.

LNG-Tanksysteme für Nutzfahrzeuge haben in der Regel zwei (oder mehr) solcher Tanks, um eine ausreichende ("dieselähnliche") Reichweite zu ermöglichen. Wie in Fig. 1 gezeigt, werden die Tanks 1, 2 auf verschiedenen Seiten am Chassis 3 eines Fahrzeugs 4 montiert. Die Füll- und Ventleitungen 5₂, 6₂ des "Slave"-Tanks 2 sind quer über das Chassis 3 zum "Master"-Tank 1 geführt und dort zusammen mit dessen Füll- und Ventleitungen 5₁, 6₁ an gemeinsame Füll- und Ventkupplungen 7, 8 angeschlossen, welche an einer Konsole 9 des Master-Tank 1 freiliegen, siehe Fig. 2 und 3. Das Absperrventil 10₂ der Ventleitung 6₂ des Slave-Tanks 2 muss jedoch aus Sicherheitsgründen nahe am Slave-Tank 2 auf dessen Fahrzeugseite angeordnet bleiben.

Für einen Ventvorgang muss der Bediener beide Absperrventile 10₁, 10₂ manuell öffnen und dazu auch um das Fahrzeug 4 herum zum Slave-Tank 2 gehen, um dort das entsprechende Ventil 10₂ zu bedienen. Nach Beendigung des Vorganges müssen beide Ventile 10₁, 10₂ wieder manuell geschlossen werden. In der Praxis wird dies unter Umständen verabsäumt und beide Absperrventile 10₁, 10₂ bleiben versehentlich offen.

Beim Betrieb eines Mehrtanksystems kommt es in der Regel zu einer unterschiedlich schnellen Entleerung der Tanks 1, 2. Wird ein Tank als erster leer, so wird diesem weiterhin Medium entzogen. Da jedoch keine Kryoflüssigkeit mehr vorhanden ist, kommt es zur Entnahme von Kryogas. Diese Entnahme führt zur raschen Druckabnahme im betreffenden Tank. Sind jedoch beide Vent-Absperrventile 10₁, 10₂ versehentlich geöffnet, so besteht eine freie Verbindung der beiden Tanks 1, 2 über die gemeinsam an die Ventkupplung 8 angeschlossenen Ventleitungen 6₁, 6₂. Über diese Verbindung wird zum Druckausgleich Gas aus dem noch vollen Tank in den leeren Tank gefördert und somit auch dort der Druck reduziert. Es kommt somit zu einem rapiden Abfall des Drucks im Gesamtsystem. Der Verbrennungsmotor kann nicht mehr weiter betrieben werden, obwohl noch Kryoflüssigkeit in einem der Tanks 1, 2 vorhanden wäre.

Mehrtanksysteme mit Wechselventilen für den Einsatz in anderen technischen Gebieten sind aus der US 2017/023179 A1 und der CN 106 864 435 A bekannt.

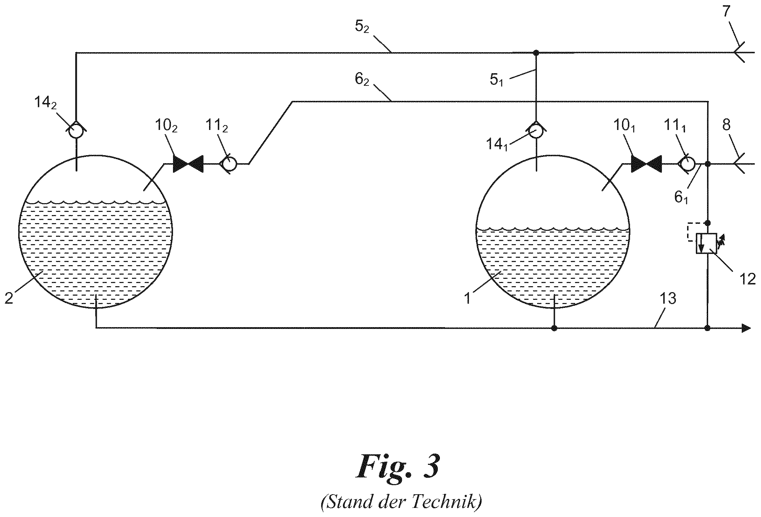

Zur Lösung dieses Problems wurde bereits vorgeschlagen, jede Ventleitung 6₁, 6₂ mit einem Rückschlagventil 11₁, 11₂ auszustatten, wie in Fig. 3 gezeigt. Dadurch kann bei versehentlichem Offenlassen der Absperrventile 10₁, 10₂ ein Druckausgleich sicher verhindert werden. Allerdings wird bei dieser Ausführung nach dem Abkuppeln einer Absaugung von der Ventkupplung 8 Kryogas zwischen den Rückschlagventilen 10₁ und 10₂ und der Ventkupplung 8 eingesperrt. Bei einer allmählichen Erwärmung dieses Kryogas kann sich gefährlicher Überdruck aufbauen. Es muss daher ein Überdruckventil 12 angebracht werden, welches den Druck in einen anderen Systembereich hin entlastet, beispielsweise zu den Entnahmeleitungen 13 der Tanks 1, 2, die zum Verbrennungsmotor führen. Für diese Lösung ist somit ein hoher Mehraufwand hinsichtlich Komponenten und Verrohrung zu leisten. Außerdem ist es nicht möglich, die Ventleitung(en) zur Druckbeaufschlagung der Tanks z.B. für Drucktests zu verwenden.

Die Erfindung setzt sich zum Ziel, die Nachteile des geschilderten Standes der Technik zu überwinden und ein Tanksystem der genannten Art zu schaffen, das einen einfachen und sicheren Tankvorgang ermöglicht und dabei ohne hohen Komponentenund Verrohrungsaufwand gegenüber Fehlbedienung geschützt ist.

Dieses Ziel wird mit einem Tanksystem der einleitend genannten Art erreicht, mit zumindest zwei Tanks zur Aufnahme eines Kryofluids, wobei an jeden Tank eine Ventleitung angeschlossen ist, die an ihrem tankseitigen Ende mit einem Absperrventil versehen und zu einer allen Tanks gemeinsamen Ventkupplung für den Anschluss eines Absaugschlauches geführt ist, wobei das Tanksystem sich erfindungsgemäß dadurch auszeichnet, dass die Ventleitungen über ein Wechselventil zu der gemeinsamen Ventkupplung geführt sind.

Mithilfe der Erfindung werden auf überraschend einfache Weise alle genannten Anforderungen mit einem Schlage erfüllt. Durch die Verwendung eines Wechselventils, an dessen Eingänge die zu den Tanks führenden Ventleitungen und an dessen Ausgang die Ventkupplung angeschlossen sind, wird ein Druckausgleich zwischen den beiden Tanks über die Ventleitungen in beiden Richtungen sicher unterbunden. Der Aufwand für Komponenten und Verrohrung ist gering, es sind keine zusätzlichen Überdruckventile und Druckentlastungsleitungen erforderlich. Die Betankung des Tanksystems kann von einer Fahrzeugseite her mittels der gemeinsamen Füllkupplung und der gemeinsamen Ventkupplung erfolgen. Selbst eine Fehlbedienung des Ventsystems, d.h. wenn das Schließen der auf verschiedenen Fahrzeugseiten liegenden Vent-Absperrventile vergessen wird, führt zu keinem sicherheitskritischen Zustand oder versehentlichem Leerlaufen des Motors, selbst wenn noch Restkraftstoff in einem Tank vorhanden wäre. Nicht zuletzt kann jeweils eine der Ventleitungen auch in der entgegengesetzten Richtung betrieben werden, beispielsweise für Drucktests.

Die erfindungsgemäße Konstruktion ermöglicht die Verwendung einer Ventkupplung, die beim Abkuppeln einer Absaugung selbsttätig schließt, ohne dass Kryogas hinter der geschlossenen Ventkupplung eingesperrt wird, was sonst zu einem gefährlichen Druckaufbau führen kann. Die selbstschließende Ventkupplung verhindert, dass Kryogas unkontrolliert im Bereich der Tankstelle entweicht.

Das Tanksystem der Erfindung ist besonders für Master/Slave-Tankanordnungen geeignet, bei welchen die Tanks zur Montage an verschiedenen Seiten des Fahrzeugs ausgebildet sind und die Ventkupplung auf der Seite eines Tanks liegt. In diesem Fall liegt bevorzugt auch das Wechselventil auf dieser Seite, so dass es z.B. gemeinsam mit der Ventkupplung und auch der Füllkupplung in einer entsprechenden Konsole am Master-Tank angeordnet werden kann.

Die Erfindung wird nachstehend anhand von in den beigeschlossenen Zeichnungen dargestellten Ausführungsbeispielen näher erläutert. In den Zeichnungen zeigt:

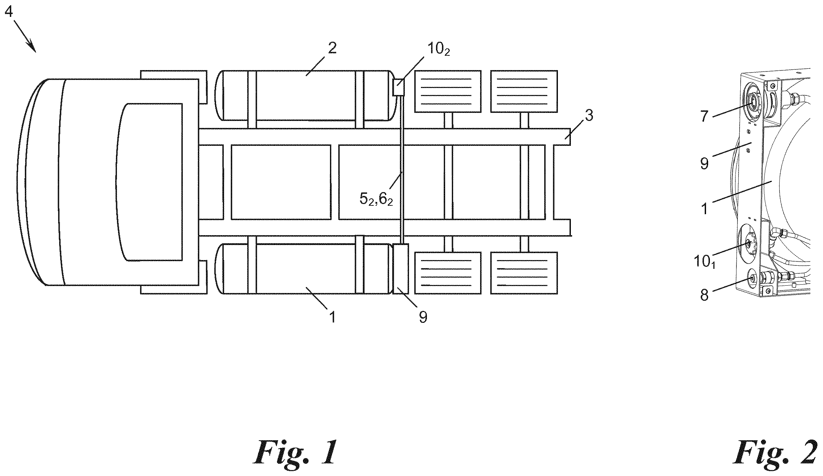

Fig. 1 zeigt ein Tanksystem gemäß der Erfindung in einer Draufsicht;
Fig. 2 die Tankkonsole des Tanksystems von Fig. 1 ausschnittsweise in einer Perspektivansicht;
Fig. 3 ein Fluidschaltbild eines Tanksystems nach dem

### Stand der Technik; und

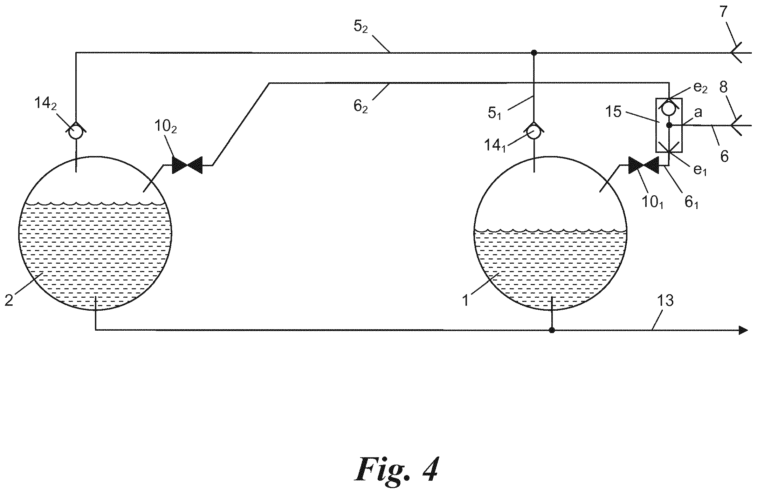

Fig. 4 ein Fluidschaltbild des erfindungsgemäßen Tanksystems der Fig. 1 und 2.

Bezüglich der Fig. 1 und 2 sowie Fig. 3, die den Stand der Technik zeigt, wird auf die Beschreibungseinleitung verwiesen, wobei sich in der nachstehenden Beschreibung der Fig. 4 gleiche Bezugszeichen auf gleiche Komponenten wie in den Fig. 1 bis 3 beziehen. Die Füllleitungen 5₁, 5₂ sind mit Rückschlagventilen 14₁, 14₂ beschaltet.

In der erfindungsgemäßen Ausführungsform von Fig. 4 sind die Ventleitungen 6₁ und 6₂ der beiden Tanks 1, 2 über ein Wechselventil 15 zu der gemeinsamen Ventkupplung 8 geführt. Genauer gesagt sind die Ventleitungen 6₁, 6₂ an die beiden Eingänge e₁, e₂ des Wechselventils 15 angeschlossen, und der Ausgang a des Wechselventils 15 steht über ein kurzes "vereinigtes" Ventleitungsstück 6 mit der Ventkupplung 8 in Verbindung.

Die Ventkupplung 8 ist selbstschließender Art, d.h. beim Ankuppeln eines Absaugschlauches (nicht gezeigt) einer Tankstelle öffnet sie, und beim Abkuppeln des Absaugschlauches schließt sie.

Das Wechselventil 15 kann von jeder in der Technik bekannten Art sein und stellt eine drucktechnische "ODER"-Verknüpfung zwischen seinen beiden Eingängen e₁, e₂ und seinem Ausgang a her. Es versteht sich, dass bei Verwendung von mehr als zwei Tanks 1, 2 mit dementsprechend mehr als zwei Ventleitungen 6₁, 6₂ diese über ein Mehrfach-Wechselventil 15 zu der gemeinsamen Ventkupplung 8 geführt sind. Ein solches Mehrfach-Wechselventil 15 kann beispielsweise durch eine Kaskade von hintereinandergeschalteten einfachen Wechselventilen mit jeweils zwei Eingängen e₁, e₂ gebildet werden, von denen der eine Eingang e₁ an den Ausgang a eines vorhergehenden einfachen Wechselventils angeschlossen ist und der andere Eingang e₂ eine weitere Ventleitung empfängt.

Zurückkehrend auf die Fig. 1 und 2 wird das Wechselventil 15 bevorzugt gemeinsam mit der Füllkupplung 7 und der Ventkupplung 8 in der Konsole 9 des Master-Tanks 1 angeordnet, um den Aufbau zu vereinfachen und den Bauraum optimal auszunützen.

Die Erfindung ist nicht auf die dargestellten Ausführungsformen beschränkt, sondern umfasst alle Varianten, Modifikationen und deren Kombinationen, die in den Rahmen der angeschlossenen Ansprüche fallen.

## Patentansprüche

1. Tanksystem für ein Fahrzeug (4), mit zumindest zwei Tanks (1, 2) zur Aufnahme eines Kryofluids als Brennstoff für das Fahrzeug, wobei das Kryofluid in den Tanks in Form eines Zweiphasengemischs aus Kryogas und Kryoflüssigkeit vorliegt, wobei an jeden Tank (1, 2) eine Füllleitung (5₁, 5₂) für Kryoflüssigkeit, eine Entnahmeleitung (13) für Kryofluid und eine vom Kopfraum des Tanks ausgehende Ventleitung (6₁, 6₂) zum Entgasen des Tanks von Kryogas zwecks erleichterten Befüllens mit Kryoflüssigkeit angeschlossen sind, wobei die Ventleitung (6₁, 6₂) an ihrem tankseitigen Ende mit einem Absperrventil (10₁, 10₂) versehen und zu einer allen Tanks (1, 2) gemeinsamen Ventkupplung (8) für den Anschluss eines Absaugschlauches geführt ist, und wobei die Ventleitungen (6₁, 6₂) an die Eingänge (e₁, e₂) eines Wechselventils (15) angeschlossen sind, dessen Ausgang (a) zu der gemeinsamen Ventkupplung (8) geführt ist.

2. Tanksystem nach Anspruch 1, **dadurch gekennzeichnet, dass** die Ventkupplung (8) beim Abkuppeln des Absaugschlauches selbsttätig schließt.

3. Tanksystem nach Anspruch 1 oder 2, **dadurch gekennzeichnet, dass** die Tanks (1, 2) zur Montage an verschiedenen Seiten des Fahrzeugs (4) ausgebildet sind und die Ventkupplung (8) auf der Seite eines Tanks (1) liegt.

4. Tanksystem nach Anspruch 3, **dadurch gekennzeichnet, dass** das Wechselventil (15) auf der Seite der Ventkupplung (8) liegt.

5. Tanksystem nach Anspruch 3 oder 4, **dadurch gekennzeichnet, dass** jede Füllleitung (5₁, 5₂) mit einem Rückschlagventil (14₁, 14₂) versehen und zu einer allen Tanks (1, 2) gemeinsamen Füllkupplung (7) geführt ist, welche auf der Seite der Ventkupplung (8) liegt.

## Claims

1. Tank system for a vehicle (4), comprising at least two tanks (1, 2) for receiving a cryogenic fluid as fuel for the vehicle, wherein the cryogenic fluid in the tanks is present in form of a two-phase mixture of cryogenic gas and cryogenic liquid, wherein a filling line (5₁, 5₂) for cryogenic liquid, a withdrawal line (13) for cryogenic fluid, and a vent line (6₁, 6₂) outgoing from the upper portion of the tank for degassing the tank from cryogenic gas for the purpose of eased filling with cryogenic liquid are connected to each tank (1, 2), wherein the vent line (6₁, 6₂) is provided on its tank-side end with a shut-off valve (10₁, 10₂) and led to a vent coupling (8) common to all tanks (1, 2) for connecting a suction hose, and wherein the vent lines (6₁, 6₂) are connected to the inlets (e₁, e₂) of a shuttle valve (15) whose outlet (a) is led to the common vent coupling (8).

2. Tank system according to claim 1, **characterised in that** the vent coupling (8) closes automatically when the suction hose is decoupled.

3. Tank system according to claim 1 or 2, **characterised in that** the tanks (1, 2) are configured to be mounted on different sides of the vehicle (4) and the vent coupling (8) is located on the side of one tank (1).

4. Tank system according to claim 3, **characterised in that** the shuttle valve (15) is located on the side of the vent coupling (8).

5. Tank system according to claim 3 or 4, **characterised in that** each filling line (5₁, 5₂) is provided with a check valve (14₁, 14₂) and led to a fill coupling (7) common to all tanks (1, 2) and located on the side of the vent coupling (8).

## Revendications

1. Système de réservoir pour un véhicule (4), avec au moins deux réservoirs (1, 2) pour la réception d'un fluide cryogénique servant de combustible au véhicule, où le fluide cryogénique se présente dans les réservoirs sous forme d'un mélange à deux phases à base de gaz cryogénique et de liquide cryogénique, où une conduite de remplissage (5₁, 5₂) pour le liquide cryogénique, une conduite de prélèvement (13) pour le fluide cryogénique et une conduite de dégazage (6₁, 6₂) partant de l'espace supérieur du réservoir pour le dégazage du gaz cryogénique à partir du réservoir dans le but d'un remplissage plus facile avec le liquide cryogénique sont connectées à chaque réservoir (1, 2), où la conduite de dégazage (6₁, 6₂) est munie d'une soupape d'arrêt (10₁, 10₂) au niveau de son extrémité côté réservoir et est menée vers un raccord de dégazage (8) commun à tous les réservoirs (1, 2) pour la connexion d'un tuyau d'aspiration, et où les conduites de dégazage (6₁, 6₂) sont raccordées aux entrées (e₁, e₂) d'une soupape à deux voies (15) dont la sortie (a) est menée vers le raccord de dégazage (8) commun.

2. Système de réservoir selon la revendication 1, **caractérisé en ce que** le raccord de dégazage (8) se ferme automatiquement lors du découplage du tuyau d'aspiration.

3. Système de réservoir selon la revendication 1 ou 2, **caractérisé en ce que** les réservoirs (1, 2) sont conçus pour un montage sur divers côtés du véhicule (4) et le raccord de dégazage (8) se situe sur un côté d'un réservoir (1).

4. Système de réservoir selon la revendication 3, **caractérisé en ce que** la soupape à deux voies (15) se situe sur le côté du raccord de dégazage (8).

5. Système de réservoir selon la revendication 3 ou 4, **caractérisé en ce que** chaque conduite de remplissage (5₁, 5₂) est munie d'un clapet anti-retour (14₁, 14₂) et est menée vers un raccord de remplissage (7) commun de tous les réservoirs, lequel se situe sur le côté du raccord de dégazage (8).
